# EUROPÄISCHE PATENTANMELDUNG

(11) **EP 2 505 980 A2**
(43) Veröffentlichungstag der Anmeldung: **03.10.2012**
(21) Anmeldenummer: 12000757.0
(22) Anmeldetag: 06.02.2012
(51) Int. Cl.: G01L 3/10, B62D 1/02, B62D 1/12, B62D 6/10

(54) **Verfahren und Vorrichtung zur Bestimmung eines Drehmoments**

(30) Priorität: 19.03.2011 DE 102011014472
(71) Anmelder: Volkswagen Aktiengesellschaft, 38440 Wolfsburg (DE)
(72) Erfinder: Baller, Marius, 38173 Sickte (DE); Swieter, Ingo, 38162 Cremlingen (DE); Lüddecke, Jens, 38176 Wendeburg (DE); Unger, Thomas, 38104 Braunschweig (DE)

(57) **Zusammenfassung**

Die Erfindung betrifft ein Verfahren zur Bestimmung eines Drehmoments (M) in einem Lenksystem eines Kraftfahrzeuges, wobei das Drehmoment (M) mittels einer Lenkhandhabe (1) auf eine Lenksäule (2) des Lenksystems aufgebracht wird, wobei ein Torsionselement einen ersten Abschnitt (2a) der Lenksäule (2) mit einem zweiten Abschnitt (2b) der Lenksäule (2) drehelastisch verbindet, wobei ein Drehmomentsensor (3) eine relative Verdrehung zwischen dem ersten und dem zweiten Abschnitt (2a, 2b) erfasst, wobei in einer Abhängigkeit einer relativen Verdrehung zwischen dem ersten und dem zweiten Abschnitt (2a, 2b) das Drehmoment (M) ermittelt wird, wobei das Drehmoment (M) in einem ersten Drehwinkelbereich (T1) mittels einer ersten Abbildungsfunktion bestimmt wird, wobei das Drehmoment (M) in einem zweiten Drehwinkelbereich (T2) mittels einer zweiten Abbildungsfunktion bestimmt wird, wobei die erste Abbildungsfunktion von der zweiten Abbildungsfunktion verschieden ist, wodurch die Lenkhandhabe (1) mindestens in einem Winkelbereich von ±90° bezogen auf eine Neutralstellung der Lenkhandhabe (1) verstellbar ist.

## Beschreibung

Die Erfindung betrifft ein Verfahren und eine Vorrichtung zur Bestimmung eines Drehmoments in einem Lenksystem eines Kraftfahrzeuges.

In Kraftfahrzeugen werden heutzutage in der Regel Servolenksysteme eingesetzt. In solchen Servolenksystemen erzeugt ein Aktor, z. B. ein Servomotor oder ein hydraulischer Aktor, ein Unterstützungsmoment, um einen Kraftfahrzeugführer bei einem Lenkmanöver zu unterstützen. Das Unterstützungsmoment wird hierbei mittels einer Steuer- oder Regeleinrichtung unter anderem in Abhängigkeit eines von dem Kraftfahrzeugführer aufgebrachten Lenk- oder Handmoments bestimmt. Das Lenk- oder Handmoment wird hierbei z. B. mittels einer Lenkhandhabe, beispielsweise eines Lenkrades, auf eine Lenksäule des Lenksystems aufgebracht und mittels eines Drehmomentsensors erfasst.

Um eine möglichst genaue Bestimmung des Drehmoments zu ermöglichen, weisen die Drehmomentsensoren in der Regel eine möglichst lineare Charakteristik in einem vorbestimmten Drehwinkelbreich auf, wobei die Charakteristik eine Zusammenhang zwischen einer relativen Verdrehung und dem Drehmoment wiedergibt. Z. B. kann ein Drehwinkel zwischen einer Ein- und Ausgangswelle des Drehmomentsensors von ±4° ein Drehmoment von ±8 Nm wiedergeben. Zum mechanischen Schutz des Drehmomentsensors werden im Allgemeinen mechanische Anschläge verwendet, die eine maximale Verdrehung begrenzen, sodass keine mechanische Beschädigung des Drehmomentsensors auftreten kann.

Befindet sich der Drehmomentsensor in einer solchen Anschlagstellung, so kann das anliegende Drehmoment allerdings nicht mehr auf Grundlage der linearen Charakteristik ermittelt werden.

Die DE 10 2005 047 766 A1 offenbart eine Lenkbetätigungseinrichtung für ein Fahrzeug mit einem Bedienungselement zur Vorgabe von Lenkbefehlen durch Ausübung von Drehmomenten auf das Bedienungselement durch eine Bedienungsperson, einer Sensoranordnungsüberwachung des Lenkbefehlsvorgabezustandes des Bedienungselementes und einer elektronischen Steuereinrichtung zur Umsetzung der von der Sensoranordnung erfassten Lenkbefehlvorgabedaten in Steuerungsinformationen für eine Lenkantriebsvorrichtung des Fahrzeugs. Hierbei ist die Sensoranordnung dazu eingerichtet, den jeweiligen Lenkbefehlvorgabezustand des Bedienungselementes von mittels der Überwachung der elastischen Materialdeformation, insbesondere Torsion, eines durch ein Lenkbefehlvorgabedrehmoment am Bedienungselement auf elastische Deformation beanspruchten, mit dem Bedienungselement gekoppelten oder diesen zugehörigen Elementes zu erfassen. Weiter offenbart die Druckschrift, dass das Bedienungselement über einen eng begrenzten Lenkbetätigungsbereich zwischen zwei Anschlagstellungen beweglich gelagert ist und die Sensoranordnung einen den Bewegungszustand des Bedienungselementes in dem Lenkbetätigungsbereich überwachenden Sensor umfasst, wobei die Sensoranordnung ferner dazu eingerichtet ist, über die Anschlagstellung hinaus auf das Bedienungselement ausgeübte Lenkbefehlvorgabe Drehmomente zu erfassen.

Es stellt sich das technische Problem, ein Verfahren und eine Vorrichtung zur Bestimmung eines Drehmoments in einem Lenksystem eines Kraftfahrzeuges zu ermitteln, wobei eine Lenkhandhabe in einem weiten Bereich verstellbar ist und eine genaue Bestimmung des Drehmoments über einen großen Bereich von Drehmomenten möglich ist.

Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen.

Vorgeschlagen wird ein Verfahren zur Bestimmung eines Drehmoments in einem Lenksystem eines Kraftfahrzeuges. Hierbei wird das Drehmoment mittels einer Lenkhandhabe, beispielsweise eines Lenkrades, auf eine Lenksäule des Lenksystems aufgebracht. Das Drehmoment kann hierbei ein sogenanntes Handmoment oder Lenkmoment bezeichnen, welches von einem Kraftfahrzeugführer auf die Lenkhandhabe ausgeübt wird. In dem Lenksystem ist ein Drehmomentsensor angeordnet. Ein Torsionselement, beispielsweise ein Torsionsstab, verbindet einen ersten Abschnitt der Lenksäule mit einem zweiten Abschnitt der Lenksäule drehelastisch. Hierbei kann der zweite Abschnitt der Lenksäule beispielsweise einen Verbindungsabschnitt, insbesondere eine Ritzelwelle, zwischen dem Torsionselement und einem Lenkritzel bezeichnen, wobei das Lenkritzel eine mechanische Kopplung der Lenksäule mit einer Zahnstange des Lenksystems darstellt. Ein Drehmomentsensor erfasst eine relative Verdrehung zwischen dem ersten und dem zweiten Abschnitt. In Abhängigkeit einer relativen Verdrehung zwischen dem ersten und dem zweiten Abschnitt wird ein Drehmoment ermittelt. Hierfür kann der Drehmomentsensor z.B. ein die relative Verdrehung repräsentierendes Signal, z.B. eine Ausgangsspannung, erzeugen. Der Drehmomentsensor kann hierbei ein induktiver, kapazitiver, optischer oder resistiver Sensor sein. Hierbei führt das mittels der Lenkhandhabe aufgebrachte Drehmoment zu einer relativen Verdrehung zwischen dem ersten und dem zweiten Abschnitt, wobei das Drehmoment umso höher ist, je höher die Verdrehung ist. Das Drehmoment wird in einem ersten Drehwinkelbereich mittels einer ersten Abbildungsfunktion und einem zweiten Drehwinkelbereich mittels einer zweiten Abbildungsfunktion bestimmt, wobei die erste Abbildungsfunktion von der zweiten Abbildungsfunktion verschieden ist. Die Abbildungsfunktionen geben hierbei einen Zusammenhang zwischen der relativen Verdrehung und dem aufgebrachten Drehmoment wieder. Die Drehwinkelbereiche umfassen hierbei Drehwinkel, die sich bei einer relativen Verdrehung zwischen dem ersten und dem zweiten Abschnitt einstellen.

Erfindungsgemäß ist hierbei die Lenkhandhabe mindestens in einem Winkelbereich von ±90° bezogen auf eine Neutralstellung der Lenkhandhabe verstellbar. Die Neutralstellung bezeichnet hierbei eine Stellung der Lenkhandhabe, die einer Geradeausfahrt des Kraftfahrzeuges entspricht. Somit ergibt sich ein weiter Einstellbereich oder Lenkbetätigungsbereich der Lenkhandhabe, in welchem eine genaue Bestimmung eines Drehmoments möglich ist. Hierbei wird ein Winkelbereich des Lenkwinkels von Endanschlägen begrenzt, die insbesondere verschieden von den nachfolgenden erläuterten Endanschlägen zur Begrenzung einer relativen Verdrehung zwischen dem ersten und dem zweiten Abschnitt der Lenksäule sind. Ein aktueller Lenkwinkel erlaubt in der Regel einen Rückschluss auf eine Verdrehung des ersten Abschnitts der Lenksäule, wobei die Lenkhandhabe beispielsweise über ein Getriebe oder direkt mit dem ersten Abschnitt mechanisch gekoppelt ist. So kann eine Verdrehung des ersten Abschnitts proportional zu dem aktuellen Lenkwinkel sein. Die relative Verdrehung zwischen dem ersten und zweiten Abschnitt ist jedoch nicht zwingendermaßen proportional zu dem aktuellen Lenkwinkel, da sich eine Verdrehung des zweiten Abschnitts und somit auch eine relative Verdrehung zwischen dem ersten und zweiten Abschnitt in Abhängigkeit der am zweiten Abschnitt anliegenden Drehmomente einstellt. Diese Drehmomente können beispielsweise das über das Torsionselement übertragene Drehmoment und ein von der Zahnstange mittels z.B. eines Lenkritzels übertragenes Drehmoment umfassen.

Hierbei kann zwischen der Lenkhandhabe und der Lenksäule ein Getriebe angeordnet sein, mit welchem ein vorbestimmtes Übersetzungsverhältnis zwischen einem Winkel der Lenkhandhabe und einem korrespondierenden Winkel der Lenksäule, insbesondere des ersten Abschnittes der Lenksäule, einstellbar ist.

Die Lenkhandhabe kann hierbei vorzugsweise in Winkelbereichen verstellbar sein, die größer als ±90° bezogen auf die Neutralstellung sind. Beispielsweise kann die Lenkhandhabe mindestens in einem Winkelbereich von ±720° bis hin zu ±800° bezogen auf eine Neutralstellung der Lenkhandhabe verstellbar sein.

Durch das erfindungsgemäße Verfahren ergibt sich in vorteilhafter Weise, dass das Drehmoment mittels der ersten und zweiten Abbildungsfunktion, die voneinander verschieden sind, in einem großen Lenkwinkelbereich ermittelt werden kann. Insbesondere kann somit das Drehmoment in einem ersten Drehwinkelbereich bestimmt werden, in welchem ein erster, beispielsweise linearer, Zusammenhang zwischen einem Drehwinkel und dem anliegenden Drehmoment besteht sowie in einem von diesem ersten Bereich abweichenden zweiten Bereich, in welchem ein von diesem ersten Zusammenhang abweichender Zusammenhang besteht.

In einer weiteren Ausführungsform weist das Lenksystem mindestens zwei Endanschläge auf. Die Endanschläge begrenzen eine relative Verdrehung zwischen dem ersten und dem zweiten Abschnitt. Somit begrenzen die Endanschläge eine Verdrehung oder Auslenkung des Torsionselements. Die Endanschläge können hierbei z.B. an einem Gehäuse des Drehmomentsensors und/oder des Torsionselements und/oder an der Lenksäule angeordnet sein oder von diesen ausgebildet werden. Insbesondere können die Endanschläge auch durch eine aufeinander abgestimmte geometrische Dimensionierung des ersten und des zweiten Abschnitts der Lenksäule ausgebildet werden. Hierbei kann der erste Abschnitt z.B. über eine Öffnung des zweiten Abschnitts in den zweiten Abschnitt eingeführt werden, wobei eine Dimensionierung des ersten Abschnitts oder eines Querschnitts des ersten Abschnitts derart auf eine Dimensionierung der Öffnung abgestimmt ist, dass der erste Abschnitt gegenüber dem zweiten Abschnitt zwischen einem minimalen und einem maximalen Anschlagwinkel frei verdrehbar ist.

Im ersten Drehwinkelbereich ist ein Drehwinkel kleiner als der maximale Anschlagwinkel und größer als der minimale Anschlagwinkel. Der erste Drehwinkelbereich bezeichnet somit den Bereich von einem minimalen bis zu einem maximalen Anschlagwinkel oder einen Teilbereich hiervon. Ein Anschlagwinkel bezeichnet hierbei einen Drehwinkel, in welchem die gegeneinander verdrehbaren Abschnitte der Lenksäule erstmalig eine Anschlagstellung einnehmen oder das Torsionselement erstmalig eine Anschlagstellung einnimmt. Die Anschlagstellung bezeichnet eine Stellung des ersten zu dem zweiten Abschnitt mit einem Drehwinkel, in welcher ein mechanischer Kontakt zwischen den gegeneinander verdrehbaren Abschnitten oder ein mechanischer Kontakt des Torsionselements mit den Endanschlägen besteht. Der Anschlagwinkel bezeichnet hierbei den Drehwinkel, bei welchem der mechanische Kontakt zwischen den gegeneinander verdrehbaren Abschnitten oder zwischen dem Torsionselement und den Endanschlägen erstmalig auftritt, also eine erstmalige Berührung erfolgt. Hierbei ist zu beachten, dass bei einer weiteren relativen Verdrehung des ersten zu dem zweiten Abschnitt immer noch ein mechanischer Kontakt zwischen den gegeneinander verdrehbaren Abschnitten oder ein mechanischer Kontakt des Torsionselements mit den Endanschlägen gegeben ist und somit weiter eine Anschlagstellung vorliegt, die entsprechenden Winkel jedoch nicht den erfindungsgemäßen Anschlagwinkeln entsprechen müssen.

Hierdurch ergibt sich in vorteilhafter Weise, dass ein Drehmoment mittels der ersten Abbildungsfunktion für einen Drehwinkelbereich zwischen einem minimalen und einem maximalen Anschlagwinkel bestimmt werden kann, wodurch in konsequenter Weise das Drehmoment mittels der zweiten Abbildungsfunktion für einen hiervon verschiedenen Drehwinkelbereich bestimmt werden kann.

In einer weiteren Ausführungsform ist im zweiten Drehwinkelbereich ein Drehwinkel größer oder gleich dem maximalen Anschlagwinkel oder ein Drehwinkel kleiner oder gleich dem minimalen Anschlagwinkel. Hierdurch ergibt sich in vorteilhafter Weise, dass der erste Drehwinkelbereich ein Bereich von Drehwinkeln zwischen dem minimalen und dem maximalen Anschlagwinkel umfasst, wobei der zweite Drehwinkelbereich Drehwinkel außerhalb des ersten Drehwinkelbereichs, insbesondere Drehwinkel, in denen sich die gegeneinander verdrehbaren Abschnitte der Lenksäule oder das Torsionselement in einer Anschlagstellung befindet, umfasst. Im zweiten Drehwinkelbereich wird das Drehmoment mittels der zweiten Abbildungsfunktion bestimmt, die einen Zusammenhang zwischen dem Drehwinkel der sich in Anschlagstellung befindlichen gegeneinander verdrehbaren Abschnitte der Lenksäule oder des sich in Anschlagstellung befindenden Torsionselement zum resultierenden Drehmoment wiedergibt.

Der maximale und der minimale Anschlagwinkel können hierbei von einem Betrag des maximalen oder minimalen Anschlagwinkels her gleich sein. Beispielsweise kann der maximale Drehwinkel, bezogen auf eine relative Verdrehung der Ein- zur Ausgangswelle des Torsionselements, 8° betragen. Hierbei bezeichnet die Eingangswelle des Torsionselements beispielsweise den vorhergehend erläuterten ersten Abschnitt und die Ausgangswelle den vorhergehend erläuterten zweiten Abschnitt. Auch kann der maximale Drehwinkel 4° betragen. Auch kann der maximale Drehwinkel in einem Bereich zwischen 4° und 8° liegen. Der minimale Drehwinkel kann entsprechend -8° oder -4° betragen. Auch kann der minimale Drehwinkel in einem Bereich zwischen -4° und -8° liegen. Ein Drehwinkel von 0° entspricht hierbei einer Geradeausfahrt des Kraftfahrzeugs.

In einer weiteren Ausführungsform wird das Drehmoment in einem ersten Drehwinkelbereich ausschließlich oder zumindest in Abhängigkeit einer Torsionssteifigkeit des Torsionselements bestimmt. Das Torsionselement kann hierbei einen linearen oder quasi-linearen Zusammenhang von Drehwinkel der Ein- zur Ausgangswelle und dem Drehmoment haben. Beispielsweise kann das Torsionselement eine Federsteifigkeit von 2 Nm pro Grad aufweisen. Insbesondere kann das Torsionselement und dessen mechanische Eigenschaften, z. B. die Torsionssteifigkeit, derart gewählt werden, dass das Torsionselement zwischen dem minimalen und dem maximalen Anschlagwinkel eine lineare Charakteristik aufweist. Hieraus folgt, dass die erste Abbildungsfunktion in vorteilhafter Weise eine lineare und somit einfach zu berechnende Funktion ist. Vorstellbar ist aber auch, dass nur in einem Teilbereich des ersten Drehwinkelbereichs das Torsionselement eine lineare Charakteristik aufweist. Durch die Verwendung eines derart linearen oder quasi-linearen Torsionselements ergibt sich in vorteilhafter Weise eine möglichst einfach Bestimmung eines Drehmoments aus einer relativen Verdrehung.

In einer weiteren Ausführungsform sind die Endanschläge als mechanische Endanschläge ausgebildet, wobei die mechanischen Endanschläge eine vorbestimmte Torsionssteifigkeit und/oder ein vorbestimmtes Elastizitätsmodul aufweisen. Hierbei wird das Drehmoment im zweiten Drehwinkelbereich mindestens in Abhängigkeit der Torsionssteifigkeit und/oder des Elastizitätsmoduls der mechanischen Endanschläge bestimmt. Die mechanisch ausgebildeten Endanschläge weisen hierbei also vorbekannte mechanische Eigenschaften auf, mittels deren Kenntnis ein anliegendes Drehmoment bestimmt werden kann. Befinden sich die gegeneinander verdrehbaren Abschnitte oder das Torsionselement in einer Anschlagstellung, so gilt nicht mehr der Zusammenhang zwischen Drehwinkel und Drehmoment des ersten Drehwinkelbereichs (erste Abbildungsfunktion). Insbesondere gilt nicht mehr der lineare Zusammenhang zwischen Drehwinkel und Drehmoment, der z. B. durch das Torsionselement im ersten Drehwinkelbereich oder in einem Teilbereich des ersten Drehwinkelbereichs gewährleistet wird. Vielmehr wird der Zusammenhang zwischen dem anliegenden Drehmoment und dem Drehwinkel auch von mechanischen Eigenschaften, insbesondere der Torsionssteifigkeit und/oder des Elastizitätsmoduls, der Endanschläge beeinflusst. Werden die Endanschläge von dem ersten und dem zweiten Abschnitt bzw. durch deren aufeinander abgestimmte Dimensionierung ausgebildet, so wird der Zusammenhang zwischen dem anliegenden Drehmoment und dem Drehwinkel auch von mechanischen Eigenschaften, insbesondere der Torsionssteifigkeit und/oder des Elastizitätsmoduls und/oder der mechanischen Festigkeit, des ersten und des zweiten Abschnitts bestimmt.

Sind z. B. die.Endanschläge mit einer hohen Torsionssteifigkeit oder einer hohen mechanischen Festigkeit ausgebildet, so ist für eine vorbestimmte relative Drehung in einer Anschlagstellung ein höheres Drehmoment erforderlich als bei einer Ausbildung der mechanischen Endanschläge mit einer weichen (niedrigen) Torsionssteifigkeit oder einer weniger festen Festigkeit.

Bevorzugt werden die mechanischen Endanschläge mit einer niedrigen Torsionssteifigkeit ausgebildet, wodurch eine exakte und hoch aufgelöste Bestimmung eines Drehmoments im zweiten Drehwinkelbereich, insbesondere in einem Drehwinkelbereich, in welchem eine Anschlagstellung vorliegt, ermöglicht.

Hierdurch ergibt sich in vorteilhafter Weise, dass mechanische Eigenschaften von mechanischen Endanschlägen zur Bestimmung des Drehmoments genutzt werden können.

Hierbei ist das mechanische Übertragungssystem im ersten Drehwinkelbereich als ein sogenanntes Ein-Feder-System zu betrachten, insbesondere falls das Torsionselement als Torsionsstab ausgebildet ist. In einer Anschlagstellung, insbesondere im zweiten Drehwinkelbereich, ergibt sich das mechanische Übertragungssystem als Zwei-Feder-System, dessen Federn in Reihe geschaltet sind. Eine erste Feder wird hierbei durch das mechanische Übertragungsverhalten des Torsionselements im ersten Drehwinkelbereich, also insbesondere durch mechanische Übertragungseigenschaften eines Torsionsstabes, gebildet. Die zweite Feder ergibt sich dann aus mechanischen Eigenschaften der Endanschläge bei mechanischer Beanspruchung durch eine weitere Verdrehung des Torsionselements. Hierbei gibt die erste Abbildungsfunktion beispielsweise das mechanische Übertragungsverhalten der ersten Feder und die zweite Abbildungsfunktion das mechanische Übertragungsverhalten der in Serie geschalteten ersten und zweiten Feder wieder.

In einer weiteren Ausführungsform wird das Drehmoment im zweiten Drehwinkelbereich zusätzlich in Abhängigkeit einer Torsionssteifigkeit der Lenksäule bestimmt. Sind die mechanischen Endanschläge an nicht drehbaren Teilen der Lenksäule oder drehbaren Teilen der Lenksäule, insbesondere am zweiten Abschnitt der Lenksäule, befestigt oder werden von diesen ausgebildet, so kann ein, insbesondere ein hohes, Drehmoment ebenfalls zu einer Verdrehung oder Torsion der Lenksäule führen. In diesem Fall kann das mechanische Übertragungsverhalten des gesamten Systems als Drei-Feder-System beschrieben werden. Als dritte Feder kann hierbei die Lenksäule oder der entsprechende Abschnitt der Lenksäule betrachtet werden, der bei hohen Drehmomenten ebenfalls tordiert wird. Somit ergibt sich das mechanische Gesamtsystem als eine Serienschaltung aus drei Federn, wodurch die zweite Abbildungsfunktion das mechanische Übertragungsverhalten der in Serie geschalteten drei Federn wiederspiegelt.

In einer weiteren Ausführungsform wird ein Unterstützungsmoment eines Aktors zur Erzeugung eines Unterstützungsmoments reduziert, falls ein Betrag des bestimmten Drehmoments größer als ein vorbestimmter Betrag ist, wobei das bestimmte Drehmoment zu einem Drehwinkel aus dem zweiten Drehwinkelbereich korrespondiert. Das Drehmoment mit dem vorbestimmten Betrag kann hierbei zu einem Drehwinkel korrespondieren, der um einen vorbestimmten, geringen oder hohen Betrag größer als der maximale Anschlagwinkel oder kleiner als der minimale Anschlagwinkel ist. Wird ein derartiges Drehmoment erfasst, so kann in einfacher Art und Weise ein sogenannter mechanischer Missbrauch der Lenkung erkannt werden, insbesondere ein zu hohes Moment, welches zu einer unzulässigen mechanischen Beanspruchung des Lenksystems führt. Eine derartige Erkennung hat dann eine Reduzierung der Lenkunterstützung zur Folge, was wiederum zu einer reduzierten mechanischen Beanspruchung des Lenksystems führt. Hierdurch kann in vorteilhafter Weise z. B. eine Zahnstange auf geringere mechanische Belastung ausgelegt werden, da eine zu hohe mechanische Belastung zuverlässig erkannt und vermieden werden kann.

Hierdurch ergibt sich in vorteilhafter Weise ein Kostenersparnis bei der mechanischen Auslegung bei Elementen des Lenksystems.

Insgesamt ergibt sich das Verwenden von mindestens zwei Drehwinkelbereichen eine verbesserte Funktionalität der Servolenkung, da ein Drehmoment zuverlässig und genau für einen großen Lenkwinkelbereich, insbesondere auch bei resultierenden Drehwinkeln, bei denen eine Anschlagstellung vorliegt, möglich ist. Hierdurch können besondere Regel- und Steueralgorithmen mit einer hohen Regelgüte durchgeführt werden.

Weiter vorgeschlagen wird eine Vorrichtung zur Bestimmung eines Drehmoments in einem Lenksystem eines Kraftfahrzeuges. Die Vorrichtung umfasst mindestens eine Auswerteeinrichtung und einen Drehmomentsensor. Hierbei ist ein Drehmoment mittels einer Lenkhandhabe auf eine Lenksäule des Lenksystems aufbringbar, wobei der Drehmomentsensor in dem Lenksystem angeordnet ist. Ein Torsionselement, beispielsweise ein Torsionsstab, verbindet einen ersten Abschnitt der Lenksäule, insbesondere eine Eingangswelle oder mit der Eingangswelle des Torsionselements verbundenen Abschnitt der Lenksäule mit einem zweiten Abschnitt der Lenksäule, insbesondere mit einer Ausgangswelle oder mit einem mit der Ausgangswelle des Torsionselements verbundenen zweiten Abschnitt der Lenksäule, drehelastisch. Mittels des Drehmomentsensors ist eine relative Verdrehung zwischen dem ersten und dem zweiten Abschnitt erfassbar und ein Signal erzeugbar, welches die relative Verdrehung zwischen dem ersten und dem zweiten Abschnitt repräsentiert. Mittels der Auswerteeinrichtung, die datentechnisch mit dem Drehmomentsensor verbunden sein kann, ist in Abhängigkeit des Signals ein Drehmoment ermittelbar, wobei das Drehmoment in einem ersten Drehwinkelbereich mittels einer ersten Abbildungsfunktion bestimmbar ist, wobei das Drehmoment in einem zweiten Drehwinkelbereich mittels einer zweiten Abbildungsfunktion bestimmbar ist.

Die erste Abbildungsfunktion ist von der zweiten Abbildungsfunktion verschieden. Erfindungsgemäß ist die Lenkhandhabe, insbesondere ein Lenkrad, mindestens in einem Lenkwinkelbereich von ±90° bezogen auf eine Neutralstellung der Lenkhandhabe verstellbar.

In einer weiteren Ausführungsform weist das Lenksystem Endanschläge auf, wobei die Endanschläge eine relative Verdrehung zwischen dem ersten und dem zweiten Abschnitt begrenzen. Im ersten Drehwinkelbereich ist ein Drehwinkel kleiner als ein maximaler Anschlagwinkel oder größer als ein minimaler Anschlagwinkel, wobei ein Anschlagwinkel einen Drehwinkel bezeichnet, in welchem die gegeneinander verdrehbaren Abschnitte oder das Torsionselement erstmalig eine Anschlagstellung einnehmen.

In einer weiteren Ausführungsform sind die Endanschläge der Vorrichtung als mechanische Endanschläge ausgebildet, wobei die mechanischen Endanschläge eine vorbestimmte Torsionssteifigkeit und/oder ein vorbestimmtes Elastizitätsmodul, insbesondere also vorbestimmte mechanische Eigenschaften, aufweisen.

Mittels der vorgeschlagenen Vorrichtung ist in vorteilhafter Weise eines der vorhergehend erläuterten Verfahren durchführbar.

Die Erfindung wird anhand zweier Ausführungsbeispiele näher erläutert. Die Figuren zeigen:
- Fig. 1: ein schematisches Blockschaltbild eines Lenksystems,
- Fig. 2: eine schematische Darstellung einer Kennlinie mit zwei Drehwinkelbereichen und
- Fig. 3: eine schematische Darstellung einer weiteren Kennlinie mit Drehwinkelbereichen und
- Fig. 4: eine perspektivische Ansicht von Abschnitten einer Lenksäule.

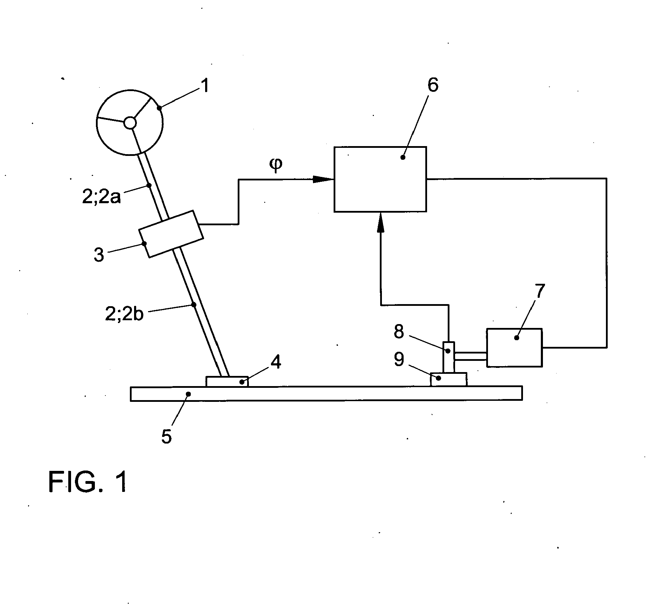

In Fig. 1 ist ein schematisches Blockschaltbild eines Lenksystems mit einer elektromechanischen Servolenkung dargestellt. Hierbei umfasst das Lenksystem eine Lenkhandhabe 1, die als Lenkrad ausgebildet ist. Über die Lenkhandhabe 1 ist ein Lenkwinkel von mindestens ±90° einstellbar, vorzugsweise von mindestens ±720° einstellbar. Weiter umfasst das Lenksystem eine Lenksäule 2, die einen ersten Abschnitt 2a und einen zweiten Abschnitt 2b aufweist. Weiter umfasst das Lenksystem einen Drehmomentsensor 3. Der Drehmomentsensor 3 erfasst eine relative Verdrehung zwischen dem ersten und dem zweiten Abschnitt 2a, 2b, wobei ein nicht dargestelltes Torsionselement den ersten Abschnitt 2a mit dem zweiten Abschnitt 2b der Lenksäule 2 drehelastisch verbindet. Über ein Getriebe 4, das auch als Lenkritzel bezeichnet werden kann, ist die Lenksäule 2 mit einer Zahnstange 5 mechanisch verbunden. Weiter umfasst das Lenksystem eine Auswerteeinrichtung 6, einen Servomotor 7, der als Elektromaschine ausgebildet sein kann, einen Rotorlagesensor 8 und ein weiteres Getriebe 9, durch das eine Abtriebsachse des Servomotors 7 mit der Zahnstange 5 mechanisch verbunden ist. Der Drehmomentsensor 3 erzeugt hierbei in Abhängigkeit einer relativen Verdrehung zwischen dem ersten und dem zweiten Abschnitt 2a, 2b ein Signal, welches den die relative Verdrehung repräsentierenden Drehwinkel ϕ repräsentiert. Der Drehmomentsensör 3 ist datentechnisch mit der Auswerteeinrichtung 6 verbunden und überträgt das den Drehwinkel ϕ repräsentierende Signal datentechnisch an die Auswerteeinrichtung 6. Diese ermittelt in Abhängigkeit des Drehwinkels ϕ ein Drehmoment M. Vorstellbar ist selbstverständlich auch, dass der Drehmomentsensor 3 über Mittel zur Bestimmung des Drehmoments M verfügt und nur dieses Drehmoment M an die Auswerteeinrichtung 6 übermittelt. Hierbei ist also die Auswerteeinrichtung 6 bzw. der Teil der Auswerteeinrichtung 6, der ein Drehmoment M in Abhängigkeit des Drehwinkels ϕ ermittelt, in den Drehmomentsensor 3 integriert.

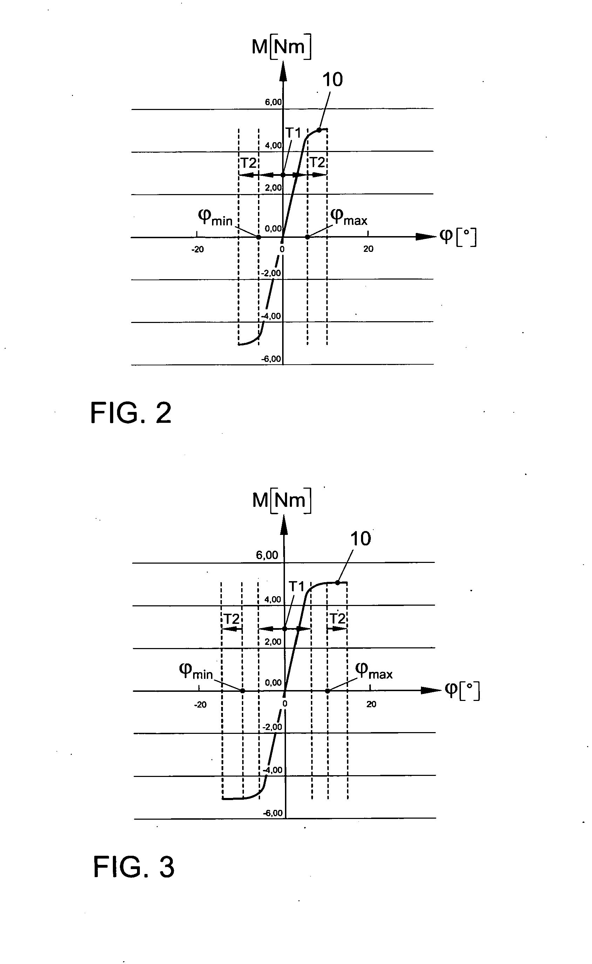

Die Auswerteeinrichtung 6 bestimmt in Abhängigkeit des Drehwinkels ϕ ein Drehmoment M, wobei das Drehmoment M in einem ersten Drehwinkelbereich T1 (siehe z. B. Fig. 2) mittels einer ersten Abbildungsfunktion und in einem zweiten Drehwinkelbereich T2 mittels einer zweiten Abbildungsfunktion bestimmt wird.

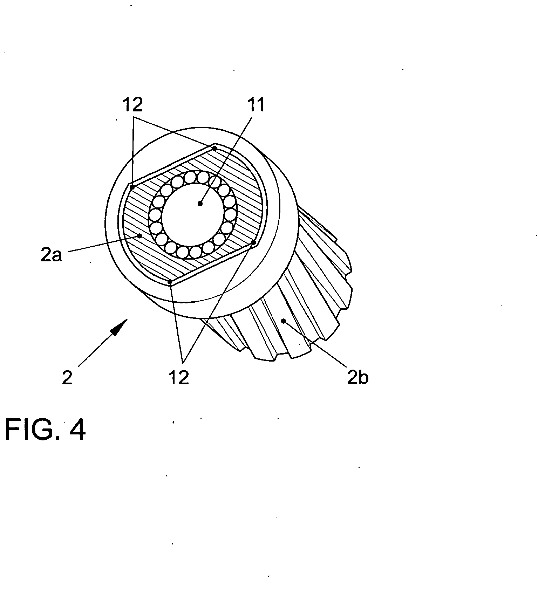

In Fig. 2 ist eine schematische Kennlinie mit dem ersten Drehwinkelbereich T1 und dem zweiten Drehwinkelbereich T2 dargestellt. Hierbei gibt die Kennlinie 10 einen Zusammenhang zwischen dem die relative Verdrehung zwischen dem ersten und dem zweiten Abschnitt 2a, 2b repräsentierenden Drehwinkel ϕ und dem anliegenden Drehmoment M wieder. Der erste Drehwinkelbereich T1 umfasst hierbei Drehwinkel ϕ, die kleiner einem maximalen Anschlagwinkel ϕₘₐₓ und größer einem minimalen Anschlagwinkel ϕₘᵢₙ sind. Ein Anschlagwinkel ϕ_{min,} ϕₘₐₓ bezeichnet hierbei einen Drehwinkel ϕ, in welchem z.B. gegeneinander verdrehbare Abschnitte 2a, 2b einer Lenksäule 2 eine Anschlagstellung einnehmen, also sich erstmalig mechanisch berühren (siehe Fig. 4). Der zweite Drehwinkelbereich T2 umfasst hierbei Drehwinkel ϕ, die größer oder gleich dem maximalen Anschlagwinkel ϕₘₐₓ oder kleiner oder gleich dem minimalen Anschlagwinkel ϕₘᵢₙ sind. Im ersten Drehwinkelbereich T1 kann der Zusammenhang zwischen dem Drehwinkel ϕ und dem Drehmoment M als linearer Zusammenhang beschrieben werden. Im zweiten Drehwinkelbereich T2 besteht größtenteils ebenfalls ein linearer Zusammenhang zwischen Drehwinkel ϕ und Drehmoment M. Allerdings, insbesondere für Drehwinkel, die nur wenig größer als der maximale Anschlagwinkel ϕₘₐₓ oder wenig kleiner als der minimale Anschlagwinkel ϕₘᵢₙ sind, gilt kein linearer Zusammenhang zwischen Drehwinkel ϕ und Drehmoment M im zweiten Drehwinkelbereich T2. Hierdurch können sich Ungenauigkeiten bei der Bestimmung des Drehmoments M im zweiten Drehwinkelbereich T2 ergeben, falls die zweite Abbildungsfunktion als lineare Funktion bestimmt wird. Hierbei sei angemerkt, dass der zweite Drehwinkelbereich T2 üblicherweise nur wenige Grad, insbesondere 1° bis 4°, umfasst.

Insbesondere kann der zweite Drehwinkelbereich T2 eine Größe aufweisen, die kleiner als die Größe des ersten Drehwinkelbereichs T1 ist. Auch kann der zweite Drehwinkelbereich T2 eine Größe aufweisen, die gleich der Größe des ersten Drehwinkelbereichs T1 ist.

Umfasst der erste Drehwinkelbereich T1 beispielsweise einen Winkelbereich von [-4° ... +4°], so kann der zweite Drehwinkelbereich T2 einen Winkelbereich von z.B. [+4° ... +6°] und einen Winkelbereich von [-4° ... -6°] umfassen. Hierbei beträgt der maximale Anschlagwinkel ϕₘₐₓ 4° und der minimale Anschlagwinkel ϕₘᵢₙ -4°.

Der zweite Drehwinkelbereich T2 kann jedoch auch größere Winkelbereiche von z.B. [+4° ... +8°] und [-4° ... -8°] umfassen. Auch kann der zweite Drehwinkelbereich T2 kleinere Winkelbereiche von z.B. [+4° ... +5°] und [-4° ... -5°] umfassen.

In Fig. 3 ist eine schematische Darstellung einer weiteren Kennlinie 10 dargestellt. Hierbei sind der maximale Anschlagwinkel ϕₘₐₓ und der minimale Anschlagwinkel ϕₘᵢₙ größer bzw. kleiner als die in Fig. 2 dargestellten Anschlagwinkel ϕₘᵢₙ, ϕₘₐₓ gewählt. Der erste Drehwinkelbereich T1 umfasst hierbei also nur einen Teilbereich von Drehwinkeln ϕ zwischen dem minimalen Anschlagwinkel ϕₘᵢₙ und dem maximalen ϕₘₐₓ. Somit ist also der erste Drehwinkelbereich T1 in Relation zu dem minimalen und maximalen Anschlagwinkel ϕₘᵢₙ, ϕₘₐₓ kleiner gewählt als der in Fig. 2 dargestellt erste Drehwinkelbereich T1, insbesondere umfasst er nicht das gesamte Intervall von Drehwinkeln zwischen dem minimalen und dem maximalen Drehwinkel ϕₘᵢₙ, ϕₘₐₓ. Hierdurch können sich Ungenauigkeiten bei der Bestimmung von Drehwinkeln ϕ aus einem Drehwinkelbereich zwischen dem ersten Drehwinkelbereich T1 und dem zweiten Drehwinkelbereich T2 ergeben. Hierfür kann beispielsweise eine dritte Abbildungsfunktion bestimmt werden, mittels derer dieser Übergangsbereich zwischen dem ersten und dem zweiten Drehwinkelbereich T1, T2 modelliert werden kann.

Auch in diesem Ausführungsbeispiel kann der zweite Drehwinkelbereich T2 eine Größe aufweisen, die kleiner als die Größe des ersten Drehwinkelbereichs T1 ist. Auch kann der zweite Drehwinkelbereich T2 eine Größe aufweisen, die gleich der Größe des ersten Drehwinkelbereichs T1 ist.

In Fig. 4 sind Abschnitte einer Lenksäule 2 schematisch dargestellt. Dargestellt ist unter anderem ein als Eingangswelle ausgebildeter erster Abschnitt 2a der Lenksäule 2, der über ein als Torsionsstab 11 ausgebildetes Torsionselement mit einem als Ritzelwelle ausgebildeten zweiten Abschnitt 2b der Lenksäule 2 drehelastisch verbunden ist. Die Ritzelwelle verbindet hierbei den Torsionsstab 11 mit dem vorhergehend erläuterten Lenkritzel (siehe Fig. 1). Die in Fig. 4 dargestellte Gesamtanordnung ist in der Regel an einem Ende der Lenksäule 2 angeordnet, welches einem Ende der Lenksäule 2 entgegengesetzt ist, an dem eine Lenkhandhabe 1 (siehe Fig. 1) angeordnet ist.

Der in Fig. 1 dargestellte Drehmomentsensor 3 besteht z.B. aus einem Sensorteil, welcher an der Ritzelwelle und/oder an einem nicht drehbaren Gehäuse, welches nicht dargestellt ist, befestigt wird und einem auf der Eingangswelle befestigten Signalgeber, der z.B. als Magnetring ausgeführt sein kann. Der Sensorteil kann hierbei z.B. einen oder mehrere gezahnte Statoren, der mitdrehend auf dem Lenkritzel angeordnet ist, und einen oder mehrere Hall-Sensoren umfassen, die fest an dem Gehäuse befestigt sind. Der Drehmomentsensor 3 kann z.B. nach einem magnetoresistiven Funktionsprinzip arbeiten, wobei eine Höhe und eine Ausrichtung eines magnetischen Flusses zwischen Statoren von den Hall-Sensoren erfasst und ausgewertet werden. Die Höhe und Ausrichtung des magnetischen Flusses können ein Maß für das anliegenden Lenkmoment darstellen.

Weiter sind in Fig. 4 mechanische Endanschläge 12 dargestellt, die durch die Eingangswelle und eine Öffnung der Ritzelwelle, durch welche die Eingangswelle in die Ritzelwelle eingeführt ist, ausgebildet werden. Insbesondere ist eine geometrische Dimensionierung eines Querschnitts der Eingangswelle und eine geometrische Dimensionierung der Öffnung der Ritzelwelle derart aufeinander angepasst, dass die Eingangswelle relativ gegenüber der Ritzelwelle nur in einem vorbestimmten Winkelintervall, insbesondere zwischen einem minimalen Anschlagwinkel ϕₘᵢₙ und einem maximalen Anschlagwinkel ϕₘₐₓ verdreht werden kann (siehe Fig. 2).

### Bezugszeichenliste

- 1: Lenkhandhabe
- 2: Lenksäule
- 2a: erster Abschnitt
- 2b: zweiter Abschnitt
- 3: Drehmomentsensor
- 4: Getriebe
- 5: Zahnstange
- 6: Auswerteeinrichtung
- 7: Servomotor
- 8: Rotorlagesensor
- 9: Getriebe
- 10: Kennlinie
- 11: Torsionsstab
- 12: Endanschläge
- ϕ: Drehwinkel
- M: Drehmoment
- ϕₘᵢₙ: minimaler Anschlagwinkel
- ϕₘₐₓ: maximaler Anschlagwinkel
- T1: erster Drehwinkelbereich
- T2: zweiter Drehwinkelbereich

## Patentansprüche

1. Verfahren zur Bestimmung eines Drehmoments (M) in einem Lenksystem eines Kraftfahrzeuges, wobei das Drehmoment (M) mittels einer Lenkhandhabe (1) auf eine Lenksäule (2) des Lenksystems aufgebracht wird, wobei ein Torsionselement einen ersten Abschnitt (2a) der Lenksäule (2) mit einem zweiten Abschnitt (2b) der Lenksäule (2) drehelastisch verbindet, wobei ein Drehmomentsensor (3) eine relative Verdrehung zwischen dem ersten und dem zweiten Abschnitt (2a, 2b) erfasst, wobei in einer Abhängigkeit einer relativen Verdrehung zwischen dem ersten und dem zweiten Abschnitt (2a, 2b) das Drehmoment (M) ermittelt wird, wobei das Drehmoment (M) in einem ersten Drehwinkelbereich (T1) mittels einer ersten Abbildungsfunktion bestimmt wird, wobei das Drehmoment (M) in einem zweiten Drehwinkelbereich (T2) mittels einer zweiten Abbildungsfunktion bestimmt wird, wobei die erste Abbildungsfunktion von der zweiten Abbildungsfunktion verschieden ist,
**dadurch gekennzeichnet, dass**
die Lenkhandhabe (1) mindestens in einem Winkelbereich von ±90° bezogen auf eine Neutralstellung der Lenkhandhabe (1) verstellbar ist.

2. Verfahren nach Anspruch 1, **dadurch gekennzeichnet, dass** eine relative Verdrehung zwischen dem ersten und dem zweiten Abschnitt (2a, 2b) durch Endanschläge (12) begrenzt ist, wobei im ersten Drehwinkelbereich (T1) ein Drehwinkel (ϕ) kleiner als ein maximaler Anschlagwinkel (ϕₘₐₓ) und größer als ein minimaler Anschlagwinkel (ϕₘᵢₙ) ist, wobei ein Anschlagwinkel (ϕₘₐₓ,ϕₘᵢₙ) einen Drehwinkel (ϕ) bezeichnet, in welchem die gegeneinander verdrehbaren Abschnitte (2a, 2b) oder das Torsionselement erstmalig eine Anschlagstellung einnimmt.

3. Verfahren nach Anspruch 2, **dadurch gekennzeichnet, dass** im zweiten Drehwinkelbereich (T2) ein Drehwinkel (ϕ) größer oder gleich dem maximalen Anschlagwinkel (ϕₘₐₓ) oder ein Drehwinkel (ϕ) kleiner oder gleich dem minimalen Anschlagwinkel (ϕₘᵢₙ) ist.

4. Verfahren nach einem der vorangegangenen Ansprüche, **dadurch gekennzeichnet, dass** das Drehmoment (M) in einem ersten Drehwinkelbereich (T1) ausschließlich oder zumindest in Abhängigkeit einer Torsionssteifigkeit des Torsionselements bestimmt wird.

5. Verfahren nach einem der vorangegangenen Ansprüche, **dadurch gekennzeichnet, dass** die Endanschläge (12) als mechanische Endanschläge (12) ausgebildet sind, wobei die mechanischen Endanschläge (12) eine vorbestimmte Torsionssteifigkeit und/oder ein vorbestimmtes Elastizitätsmodul aufweisen, wobei das Drehmoment (M) im zweiten Drehwinkelbereich (T2) mindestens in Abhängigkeit der Torsionssteifigkeit und/oder des Elastizitätsmoduls der mechanischen Endanschläge (12) bestimmt wird.

6. Verfahren nach einem der vorangegangenen Ansprüche, **dadurch gekennzeichnet, dass** das Drehmoment (M) im zweiten Drehwinkelbereich (T2) zusätzlich in Abhängigkeit einer Torsionssteifigkeit der Lenksäule (2) bestimmt wird.

7. Verfahren nach einem der Ansprüche 2 bis 6, **dadurch gekennzeichnet, dass** ein Unterstützungsmoment eines Aktors zur Erzeugung eines Unterstützungsmoments reduziert wird, falls ein Betrag des bestimmten Drehmoment (M) größer als ein vorbestimmter Betrag ist, wobei das bestimmte Drehmoment (M) zu einem Drehwinkel (ϕ) aus dem zweiten Drehwinkelbereich (T2) korrespondiert.

8. Vorrichtung zur Bestimmung eines Drehmoments (M) in einem Lenksystem eines Kraftfahrzeuges, wobei die Vorrichtung mindestens eine Auswerteeinrichtung (6) und einen Drehmomentsensor (3) umfasst, wobei das Drehmoment (M) mittels einer Lenkhandhabe (1) auf eine Lenksäule (2) des Lenksystems aufbringbar ist, wobei der Drehmomentsensor (3) in der Lenksäule (2) angeordnet ist, wobei ein Torsionselement einen ersten Abschnitt (2a) der Lenksäule (2) mit einem zweiten Abschnitt (2b) der Lenksäule (2) drehelastisch verbindet, wobei mittels des Drehmomentsensors (3) eine relative Verdrehung zwischen dem ersten und dem zweiten Abschnitt (2a, 2b) erfassbar ist, wobei mittels des Drehmomentsensors (3) ein Signal erzeugbar ist, welches die relative Verdrehung zwischen dem ersten und dem zweiten Abschnitt (2a, 2b) repräsentiert, wobei mittels der Auswerteeinrichtung (6) in Abhängigkeit des Signals ein Drehmoment (M) ermittelbar ist, wobei das Drehmoment (M) in einem ersten Drehwinkelbereich (T1) mittels einer ersten Abbildungsfunktion bestimmbar ist, wobei das Drehmoment (M) in einem zweiten Drehwinkelbereich (T2) mittels einer zweiten Abbildungsfunktion bestimmbar ist, wobei die erste Abbildungsfunktion von der zweiten Abbildungsfunktion verschieden ist,
**dadurch gekennzeichnet, dass**
die Lenkhandhabe (1) mindestens in einem Winkelbereich von ±90° bezogen auf eine Neutralstellung der Lenkhandhabe (1) verstellbar ist.

9. Vorrichtung nach Anspruch 8, **dadurch gekennzeichnet, dass** das Lenksystem Endanschläge (12) umfasst, wobei die Endanschläge (12) eine relative Verdrehung zwischen dem ersten und dem zweiten Abschnitt (2a, 2b) begrenzen, wobei im ersten Drehwinkelbereich (T1) ein Drehwinkel (ϕ) kleiner als ein maximaler Anschlagwinkel (ϕₘₐₓ) und größer als ein minimaler Anschlagwinkel (ϕₘᵢₙ) ist, wobei ein Anschlagwinkel (ϕₘₐₓ, ϕₘᵢₙ) einen Drehwinkel (ϕ) bezeichnet, in welchem die gegeneinander verdrehbaren Abschnitte (2a, 2b) oder das Torsionselement erstmalig eine Anschlagstellung einnimmt.

10. Vorrichtung nach Anspruch 9, **dadurch gekennzeichnet, dass** die Endanschläge (12) als mechanische Endanschläge (12) ausgebildet sind, wobei die mechanischen Endanschläge (12) eine vorbestimmte Torsionssteifigkeit und/oder ein vorbestimmtes Elastizitätsmodul aufweisen, wobei das Drehmoment (M) im zweiten Drehwinkelbereich (T2) mindestens in Abhängigkeit der Torsionssteifigkeit und/oder des Elastizitätsmoduls der mechanischen Endanschläge (12) bestimmbar ist.
